# EUROPEAN PATENT SPECIFICATION

(11) **EP 1 323 594 B1**
(45) Date of publication and mention of the grant of the patent: **30.11.2005**
(21) Application number: 02079985.4
(22) Date of filing: 28.11.2002
(51) Int. Cl.: B60R 21/16, B60R 21/28, B60R 21/01

(54) **System and method for controlling an inflatable cushion**
Vorrichtung und Verfahren zur Steuerung eines ausblasbaren Gassacks
Système et méthode de contrôle d'un coussin gonflable

(30) Priority: 27.12.2001 US 343844 P; 10.04.2002 US 371545 P
(43) Date of publication of application: 02.07.2003
(73) Proprietor: Delphi Technologies, Inc., Troy, MI 48007 (US)
(72) Inventor: Winters, Mark T., Troy, OH 45373 (US); Dunkle, Stephanie L., Springboro, OH 45066 (US); Pinsenschaum, Ryan T., Vandalia, OH 45377 (US); Hawthorn, Laura A., Tipp City, OH 45371 (US); Kneisly, Ann L., Dayton, OH 45459 (US); Schatz, Patrick W., Tipp City, OH 45371 (US)
(74) Representative: Denton, Michael John

(56) References cited:
- WO-A-01/34436
- FR-A- 2 761 032
- US-B1- 6 270 115

## Description

### TECHNICAL FIELD

This disclosure relates generally to air bags for vehicles. Specifically, the disclosure relates to systems and methods for controlling the inflation level of an inflatable cushion of an air bag module.

### BACKGROUND

Air bag modules have become common in modern automobiles. An air bag module typically comprises an inflatable cushion and an inflator within a housing. The module is installed in a desired position within the vehicle, such as the steering wheel, the dashboard, the seat, the A-pillar, and other locations. The inflatable cushion is stored in a folded position within the housing in fluid communication with the inflator. In response, to an activation event or occurrence, a sensor provides a signal for activating the inflator. The inflator provides a supply of inflating gas to the cushion to inflate the cushion, deploying it from the housing into the vehicle.

Various methods have been employed to more closely tie the inflation level of the inflatable cushion to specific conditions. For example, dual stage inflators have been used to increase or decrease the level of inflation of the inflatable cushion. Alternatively, variable venting schemes have been used to direct a portion of a generated inflation gas away from the cushion. Further, variable tethering systems have been used to restrict or vary the overall cushion volume.

WO 01/34436 A1 discloses an air bag pressure control system for use in a vehicle, comprising:
a housing being configured for installment in the vehicle in a selected spatial relation to a seating structure;
an inflatable cushion stored in an undeployed position in said housing, said inflatable cushion being configured for deployment towards said seating structure;
a multi-stage inflator stored in said housing in fluid communication with said inflatable cushion;
a vent opening being formed in said housing, said vent opening being configured to selectively direct a portion of the inflation gas towards or away from said inflatable cushion; a sensing and diagnostic module for detecting an activation event level;
a tether element being configured to selectively retain said inflatable cushion in a profile being in a range defined by a first expanded profile and a second expanded profile;
wherein said control algorithm tailors said inflation level of said inflatable cushion during deployment by controlling said multi-stage inflator, by controlling said vent opening to direct said portion towards or away from said inflatable cushion, by controlling said tether elemment to retain said inflatable cushion in said first expanded profile or said second expanded profile, and combinations thereof;
wherein said sensing and diagnostic module detects a seat position of said seating structure.

### SUMMARY

According to the present invention there is provided an air bag pressure control system as claimed in claim 1.

The above-described and other features of the present disclosure will be appreciated and understood by those skilled in the art from the following detailed description, drawings, and appended claims.

### DRAWINGS:

Figure 1 is a schematic view of a vehicle interior showing an air bag cushion in a stored or undeployed state;
Figure 2 is a sectional view of an exemplary embodiment of an air bag module;
Figure 3 illustrates an exemplary embodiment of an inflatable cushion in a first deployed state;
Figure 4 illustrates the inflatable cushion of Figure 3 in a second deployed state;
Figure 5 is an exemplary embodiment of a control algorithm for the control of the air bag module of Figures 2-4;
Figure 6 is an alternative exemplary embodiment of the control algorithm of Figure 5; and
Figure 7 is an alternative exemplary embodiment of a control algorithm for the control of the air bag module of Figures 2-4.

### DESCRIPTION OF THE PREFERRED EMBODIMENT

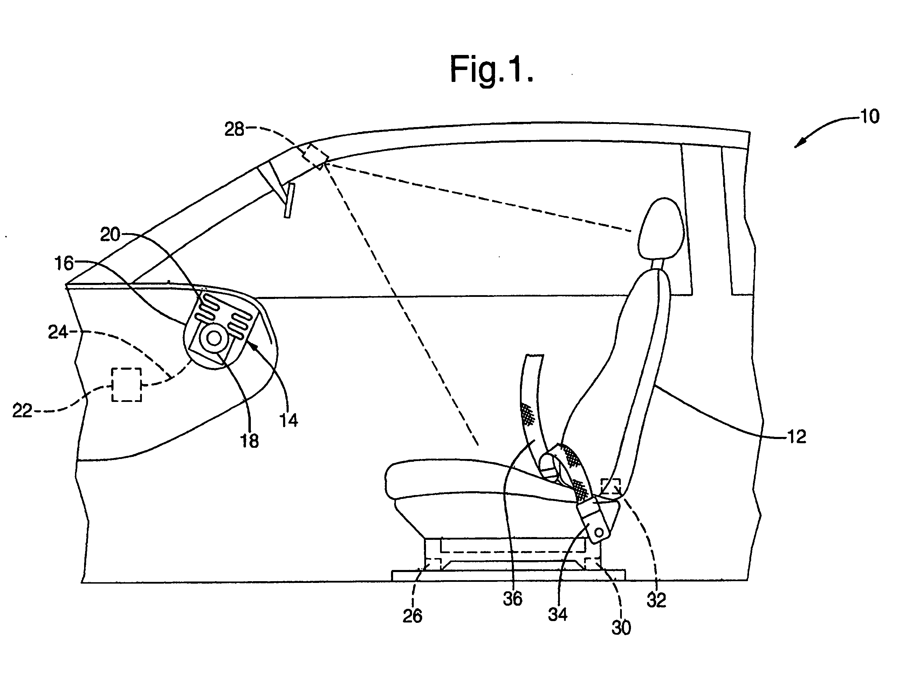

Referring now to the Figures, and in particular to Figure 1 a portion of a vehicle 10 is illustrated. Included in an interior compartment of vehicle 10 are a seating structure 12 and an air bag module 14 disposed in a selected spatial relationship with respect to seating structure 12. The air bag module 14 comprises a housing 16, an inflator 18, and an inflatable air bag or cushion 20. The module 14 is positioned in the vehicle 10 for deployment of the cushion 20 towards the seating structure 12.

A sensor or sensing-and-diagnostic module 22 is adapted to detect an activation event to provide an activation signal 24 to the inflator 18. The detection of the activation event can be determined by one or more sensors disposed about the vehicle. Thus, the activation signal 24 controls the activation of the airbag module 14.

The cushion 20 is stored in a folded or undeployed position in the housing 16, and is in fluid communication with the inflator 18. Upon detection of an activation event by the sensing-and-diagnostic module 22, the inflator 18 is activated via signal 24 to generate an inflation gas. The inflation gas causes the cushion 20 to inflate and expand from the housing 16 into the interior of the vehicle 10. It should be recognized that the module 14 is illustrated by way of example only as being included in the dashboard of the vehicle 10. Of course, it is contemplated for module 14 to be installed in other regions of the vehicle 10, such as, but not limited to the steering wheel, the seat, the A-pillar, the roof, and other locations.

The sensing-and-diagnostic module 22 can also be adapted to detect one or more conditions of the seating structure. For example, sensing-and-diagnostic module 22 can be adapted to detect one or more of the following: a load on the seating structure 12, a position of the seating structure, an angle of a portion of the seating structure with respect to another portion, the distance the seating structure is from the air bag module 14, and other data that is relevant to the deployment of the airbag. For example, the sensing-and-diagnostic module 22 can receive input from one or more sensors such as, but not limited to, a seat position sensor 26, an optical scanner 28, a load sensor 30, a seat recline sensor 32, a seat belt use detection sensor 34, and a belt tensioning sensor (not shown). The sensors are positioned to provide input signals to module 22 indicative of one or more seat conditions.

The seat position sensor 26 detects the position or distance of seating structure 12 with respect to the air bag module 14. Similarly, the optical scanner 28 can be used to detect the position of seating structure 12. The load sensor 30 is disposed within the seating structure 12 and can be used detect the load on the seating structure. Thus, sensor 30 is capable of detecting the specific weight or load on a portion of seating structure 12. The seat recline sensor 32 can be used to detect the degree or angle to which an upper or back portion of the seating structure 12 is reclined or positioned with respect to a lower or seat portion of seating structure 12. The seat belt use detection sensor 34 can determine whether the seat belt 36 is secured (e.g., buckled is inserted into its corresponding clasp). The seat belt tensioning sensor, alone or in combination with the load sensor 30, can also be used determine the load on the seating structure 12.

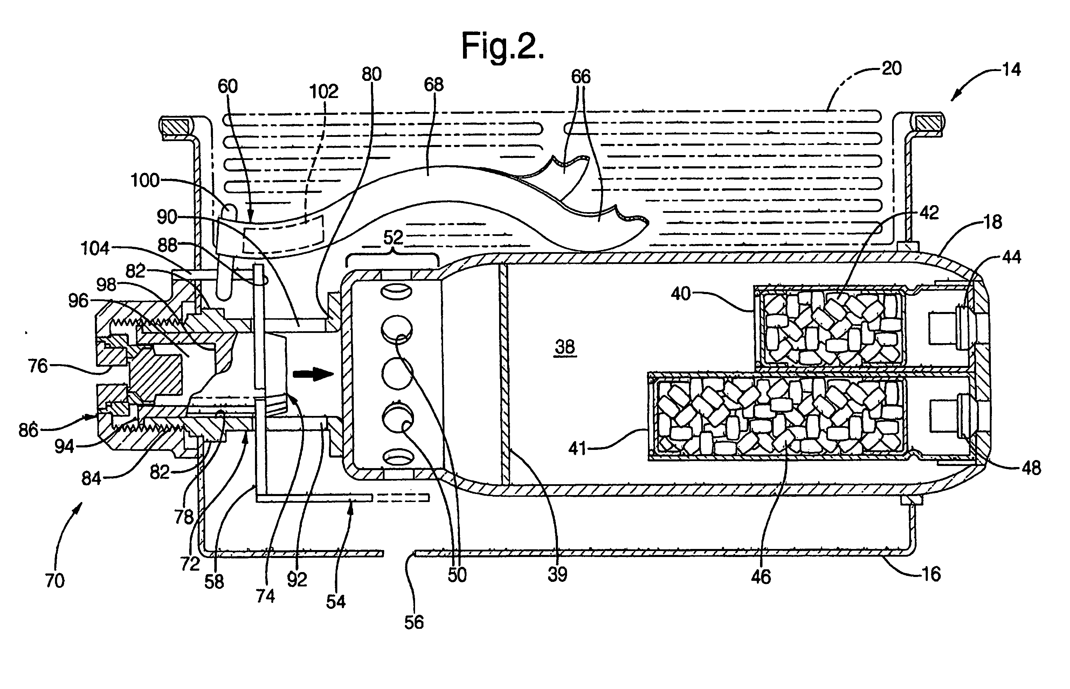

An exemplary embodiment of an air bag module for use with the present disclosure is illustrated in Figures 2-4. As will be described in detail below, air bag module 14 comprises means to customize or tailor the inflation level within the inflatable cushion 20. The inflation level is controlled by the control module 22 to be commensurate with specific data inputs received from the plurality of sensors. Specifically, the air bag module 14 is configured to adjust the quantity of inflator gas generated from the inflator 18, to adjust the quantity of inflator gas directed into the inflatable cushion 20, to adjust the volume of the cushion, and combinations of one or more of the foregoing. Here, the various means are integrally controlled to provide a simple, inexpensive, and reliable way to adapt the inflation level of cushion 20 to various conditions.

It has been determined that the pressure within the inflatable cushion upon deployment is proportional to the quantity of inflator gas expelled into the air bag and inversely proportional to the volume available to be occupied by the inflator gas within the air bag. Accordingly, the various means in the module 14 are controlled to take advantage of this principle to provide a simple, inexpensive, and reliable way to adapt the inflation level of cushion 20 in accordance with various conditions.

Turning now to Figure 2, the air bag module includes among other elements the housing, the inflator, and the inflatable air bag or cushion. The inflator is a dual stage inflator, adapted to release at least two levels of inflator gas into the cushion 20. The dual stage inflator 18 can be, for example, inflators such as, but not limited to pure gas inflators, hybrid inflators, pyrotechnic inflators, and the like.

By way of example only, dual stage inflator 18 is described herein as a hybrid inflator. Hybrid inflators include both a pressure vessel having a stored gas and one or more gas generators. When the gas generator is ignited, it generates additional gas and/or adds heat to the stored gas of the pressure vessel to provide the desired quantity of inflation gas.

Inflator 18 comprises a quantity of stored gas in a first area 38 sealed by a rupturable diaphragm 39. The first area 38 includes a first gas generator 40 and a second gas generator 41. The first generator 40 comprises a first amount of propellant 42 and a first squib or initiator 44 for igniting the same. The second gas generator 41 houses a second amount of propellant 46 and a second squib or initiator 48 for igniting the same. By way of example only, the first and second propellants can be sodium azide. Thus, the first squib 44 provides a means for igniting propellant 42 and the second squib 48 provides a means for igniting propellant 46.

The squibs (44 and 48) are activated by a signal generated by the sensing-and-diagnostic module 22. The ignition of either or both of the gas generators 40 and 41 generate an additional amount of gas and/or generate heat, which causes the gas stored in the first area 38 to increase in pressure and thus, to rupture the diaphragm 39.

Once the diaphragm 39 is ruptured, the first area 38 is in fluid communication with gas discharge ports 50. Gas discharge ports 50 generally surround a diffuser portion 52 of inflator 18 such that gas generated by the inflator is communicated to the inflatable cushion 20.

The first generator 40 is smaller (e.g., capable of generating less inflation gas and/or heat) than the second generator 41. Accordingly, the quantity of gas generated and expelled by the inflator 18 upon the ignition of the first generator 40 is smaller then the quantity of gas generated and expelled by the inflator upon the ignition of the second generator 41.

Additionally, both gas generators 40 and 41 can be ignited simultaneously or delayed from one another to allow inflator 18 to provide two or more levels of inflation. For example, firing both generators will provide a higher level of inflation than firing one or the other. In addition, by delaying the firing of one generator after the other can also cause the level of inflation to be varied. In this manner, the dual stage inflator can be configured to provide two or more levels of inflation.

Again, it should be recognized that inflator 18 is described herein by way of example only as a hybrid inflator. Of course, other inflators having means of providing more than one level of inflation are contemplated for use with the module of the present disclosure.

In an exemplary embodiment, the dual stage inflator is adapted to provide about 80% level of inflation (e.g., ignition of only the second generator 41) and to provide a 100% (e.g., simultaneous ignition of both the first and second generators).

The initiator sequencing of dual stage inflator 18 is also described above by way of example only. Of course, other initiator sequencing configurations adapted to various levels of inflation are also contemplated to be within the scope of the present disclosure. Also contemplated are dual stage inflators 18 configured to provide more or less than the 80% level of inflation. Further, the dual stage inflator 18 is described above by way of example only as providing two levels of inflation (80% and 100%). Of course, the time period between ignition of the generators 40 and 41 can be varied as to provide a range of output quantities.

Additionally, the dual stage inflator 18 is described above by way of example as igniting only the second generator 41 to provide the 80% level of inflation, and igniting the propellants of both the first and second generators 40 and 41 to provide the 100% level of inflation. Of course, it is contemplated for the dual stage inflator 18 to include a disposal ignition of the first generator 40 under any deployment conditions. For example, it is often desired that all of the pyrotechnic or potential energy be used during the deployment of the air bag cushion. Under low inflation conditions, the dual stage inflator 18 is configured to ignite the first generator 40 about 50-100 ms (milliseconds) after the ignition of the second generator 41 in order to dispose the module of stored energy. By igniting the first generator after the aforementioned delay period, the ignition of the first generator will not vary the overall or intended inflation level. Thus, the disposal ignition of the propellant of first generator does not affect the ability of the dual stage inflator 18 to provide the 80% inflation level.

As also illustrated in Figure 2, the air bag module 14 further comprises a variable inflator means. For example, a vent system 54 is adapted to direct different levels of the generated inflator gas to the cushion. The housing 16 includes a vent opening or aperture 56, while the airbag module 14 includes a vent-blocking-device 58 that is moveable between an open position and a closed position (illustrated in phantom). When the vent-blocking-device 58 is in the closed position, it covers opening 56 such that all of the inflator gas generated by inflator 18 is directed toward the opening of cushion 20 to provide a high level of inflation. When the vent-blocking-device 58 is in the open position (e.g., aperture 56 unblocked) at least a portion of the inflator gas generated by inflator 18 is allowed to flow through opening 56 and away from the cushion to provide a low level of inflation. Other vent devices contemplated for use with the present disclosure are illustrated in United States Patent Nos. 6,039,346, 6,161,866, 6,213,502 and 6,247,726, the contents of which are incorporated herein by reference thereto.

In an exemplary embodiment, the variable inflator vent system 54 is configured to provide about a 70% level of inflation when vent openings 56 are unblocked, and about a 100% level of inflation when the vent openings 56 are covered by device 58.

Of course, it should be recognized that the variable inflator vent system 54 is described above by way of example only. Also contemplated for use with the present disclosure are variable inflator vent systems 54 configured to provide other diffusion ratios, and/or more than two diffusion ratios for the cushion 20. For example, the movement of the vent-blocking-device 58 between the open and closed positions can be timed with respect to the generation of the inflator gas by inflator 18 to provide a range of output quantities between the various levels.

In a first embodiment, the air bag module 14 comprises the dual stage inflator 18 and the variable inflator vent system 54. In this configuration, the module can be controlled to provide three discrete inflation input levels.

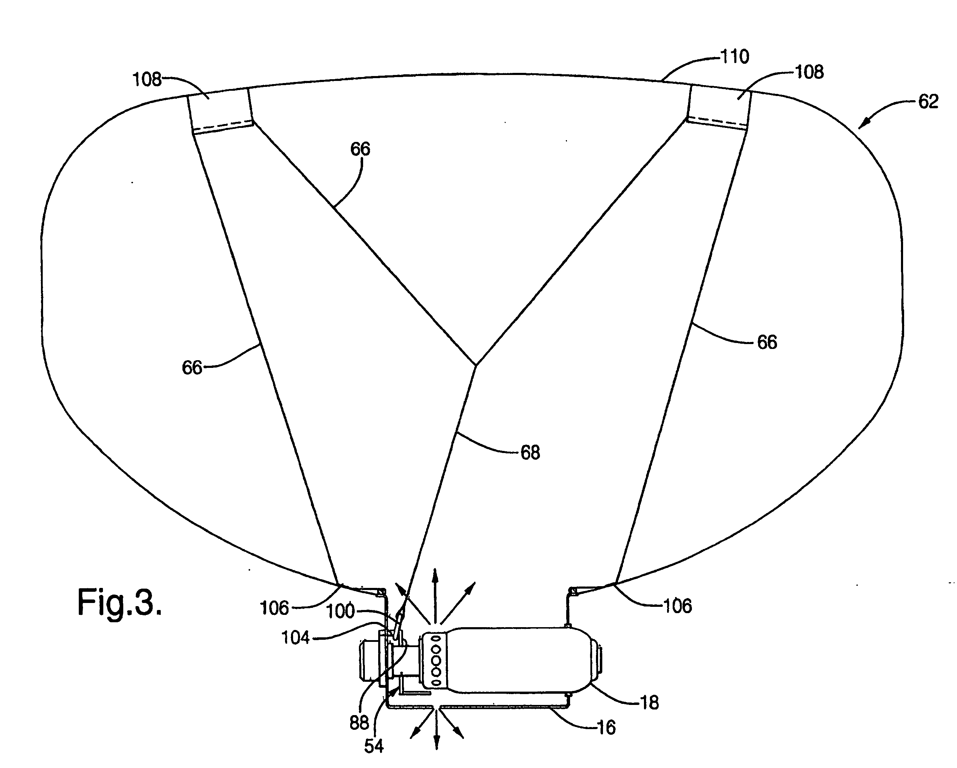

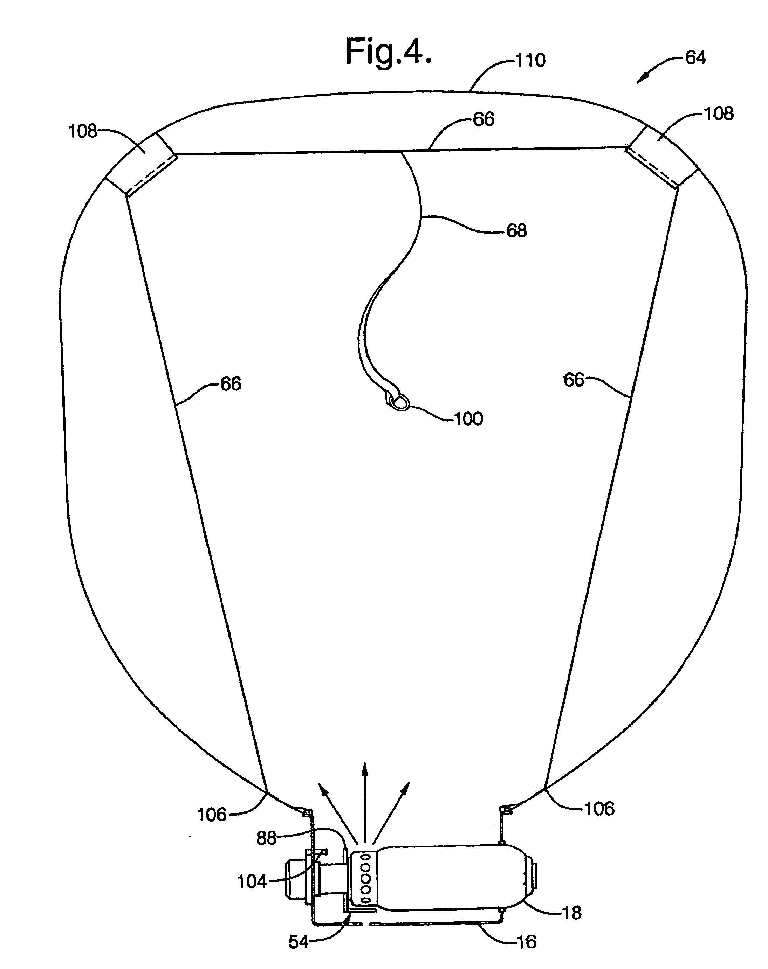

Air bag module 14 can also comprise a variable tether system 60. The variable tether system 60 is illustrated in detail in Figures 3-4. Variable tether system 60 is adapted to provide cushion 20 with either a first expanded state / profile 62 (Figure 3) or second expanded state / profile 64 (Figure 4). Thus, the variable tether system is configured to adjust the volume and rearward excursion (e.g., movement towards the seating structure 12) of the cushion.

Specifically, the variable tether system comprises one or more tethering elements 66 connected to an inner surface of the cushion at either end, and a releasable element 68 connected to the tethering elements 66 between the end points of the tethering elements. Releasable element 68 releasably secures a portion of the tethering elements to the air bag module. When the releasable element secures the tethering elements to the air bag module, the tethering element is restricted from fully expanding, and thus the cushion is maintained at the first expanded state 62. Thus, the first expanded state is provided by retaining releasable element 68 to the air bag module 14 (Figure 3). In order to provide the second expanded state, the releasable element is released from the air bag module 14 thereby allowing the tethering elements 66 to extend to their full length (Figure 4). In this manner, variable tether system 60 is configured to provide the air bag module 14 with an adjustable volume for the cushion 20 (e.g., a larger volume in Figure 4 and a smaller volume in Figure 3).

In an exemplary embodiment, the variable inflator vent system 54 is linked to the variable tether system 60. Specifically and with reference to Figure 2, an actuation mechanism 70 is adapted to operate both the variable inflator vent system 54 and the variable tether system 60. The actuation mechanism 70 comprises a support structure 72, a plunger element 74, and an initiating device 76. The support structure 72 defines an axial opening 78 into which the plunger element and the initiating device are inserted during assembly.

The support structure 72 includes a first support end 80 of a substantially flanged configuration that is secured directly to the inflator 18. First support end 80 of the support structure is secured to the inflator 18 by any suitable method, such as welding or equivalents thereof. In the embodiment of Figure 2, support structure 72 also includes a spacing shoulder 82 which is sized larger than an end opening in the housing such that the support structure is limited from going through the end opening within the housing and is properly positioned during assembly. Spacing shoulder 82 is preferably integrally formed with support structure 72 by machining or molding the same together. Alternatively, the spacing shoulder may also be provided as a separate piece attached to or slipped over the support structure. The support structure further includes a threaded end portion 84. Threaded end portion 84 extends past the spacing shoulder 82 through the end opening of the housing for mating with a cap nut 86 in order to secure the dual stage inflator and the actuation device 70 to the housing.

The plunger element is seated within the axial opening of the support structure and has an outside diameter that is slightly smaller than the axial opening such that the plunger element may slide relative to the support structure. The plunger element 74 comprises a tether-blocking-device 88 and vent-blocking-device 58. The blocking devices 88 and 58 are slidably disposed in guide channels 90 and 92, respectively. Thus, movement of plunger element 74 within support structure 72 causes the blocking devices (88 and 58) to slide within the guide channels (90 and 92).

Plunger element 74 can include a shear feature 94, which is illustrated as a flange located at the end of the plunger element 74. The shear feature is preferably integrally formed with the plunger element 74. Alternatively, shear feature 94 is a separate piece attached to the plunger element 74. The shear feature is sized to be larger than the axial opening within the support structure such that the shear feature engages the support structure during insertion of the same thereby limiting the insertion of the plunger element into the support structure. Thus, with the shear feature intact the plunger element is prevented from sliding within the support structure.

Plunger element 74 includes an axial plunger bore 96 in which initiating device 76 is sealed. Initiating device 76 is a pyrotechnic squib, pneumatic actuator or equivalent thereof. The initiating device is configured for activation by an activation signal from sensing-and-diagnostic module 22. Upon activation, initiating device 76 is configured to provide a means for urging the plunger element away from the initiating device. Plunger element 74 is urged with a force sufficient to cause shear feature 94 to break off. Thus, plunger element 74 continues to slide within the support structure until the plunger abuts a portion of inflator 18, which acts as a stop surface.

When the initiating device 76 is a pyrotechnic squib, the initiating device produces a pressure wave that reacts with a plunger reaction surface 98. The application of such force causes shear feature 94 to break off and permits the plunger element 74 to slide within the support structure 72.

The movement of the plunger element within the support structure causes both the tether-blocking-device 88 and the vent-blocking-device 58 to slide within guide channels 90 and 92, respectively. The movement of the tether-blocking-device 88 and the vent-blocking-device 58 are described in more detail below.

The movement of the plunger element within the support structure causes the tether-blocking device to slide within guide channel 90 such that the tether-blocking device releases the releasable element 68. Specifically, releasable element 68 includes a securing member 100. The securing member 100 can, for example, be secured to the releasable element 68 by stitching 102 or can be a part of the releasable element defined by the stitching.

The securing member 100 is preferably formed from materials having the ability to withstand substantial loading such as, but not limited to, nylon cords, metal rings, and equivalents thereof. The securing member is passed over a retaining stud 104 that is fixedly secured to the housing or other location wherein the location of the stud is not affected by the movement of the plunger element and other movable mechanisms of the air bag module. Thus, retaining stud 104 extends through the opening in the securing member such that the securing member may be released and pulled away from the retaining stud when tension is applied to the releasable element 68. For example, retaining stud 104 can have an angular configuration for the securing member to slide off. Alternatively, retaining stud 104 is made out of a material that is bendable by the tension of releasable element 68 once tether-blocking-device 88 is moved away from retaining stud 104. However when the plunger element is not moved from retaining stud 104, it is disposed in butting or notched relation to the tether-blocking-device 88. As will be appreciated, the tether-blocking-device 88 when held in position by shear feature 94 prevents withdrawal of securing member 100 from retaining stud 104. Thus, no movement of the plunger element causes the securing member to be retained on retaining stud 104. Upon the movement of plunger element 74 by initiating device 76, the tether-blocking-device 88 moves away from the retaining stud 104 thereby allowing the securing member to be pulled away from the retaining stud as the cushion inflates.

The operation of the tether-blocking-device 88 is best illustrated with reference to Figures 2-4. The tether-blocking-device 88 is shown in a first position (Figures 2-3) abutting the retaining stud 104 thereby securing the securing member to the housing and retaining the cushion in the first expanded state 62. Alternately, the tether-blocking-device 88 is illustrated in Figure 4 away from the retaining stud 104 thereby allowing the securing member 100 to be pulled away from the retaining stud by the inflation of cushion 20.

As illustrated through simultaneous reference to Figures 3 and 4, the air bag cushion 20 is capable of being maintained at the first expanded profile (Figure 3) or being extended to the second expanded profile (Figure 4). The second expanded profile is characterized by more inflating volume corresponding to more depth and rearward excursion of the air bag. In an exemplary embodiment, the variable tether system is configured to provide about an 87% total volume of an unrestrained cushion 20 in the first expanded state 62. The variable tether system also is configured to provide about a 100% volume of the cushion 20 when the tether-blocking-device 88 is moved away from the retaining stud 104 thereby releasing the securing member 100. Of course, a variable tether system 60 configured to provide other volumes is contemplated in accordance with the present disclosure.

Tethering elements 66 are preferably in the form of straps that limit volume and profile of cushion 20. The tethering elements 66 are preferably disposed across an interior length of the air bag cushion and extend in a travel path between fixed points of connection 106 located along the surface of the air bag cushion. As shown in Figures 3 and 4, the tethering elements 66 are preferably further connected to the surface of the air bag cushion 20 at locations along the travel path by guide elements 108. Guide elements 108 are located at a surface 110 that is distal from inflator 18. The operative length of the tethering elements 66 can be varied by, for example, varying the length of releasable element 68, the length of the securing member 100, changing the location of points 106, and/or changing the size or location of the guide elements 108. Releasable element 68 is connected to the tethering elements at a location intermediate to the fixed points of connection 106.

When the releasable element 68 is retained at the retaining stud 104, the tethering elements 66 will cause the depth of the air bag cushion 20 to be restrained to the first expanded profile 62 (e.g., 87% of the second expanded profile 64). However, when the releasable element 68 is released from the retaining stud 104, the tethering elements 66 will cause the depth of the air bag cushion 20 to be expanded to the second expanded profile 64. The second expanded profile 64 is about 13% larger than the first expanded profile 62.

In an exemplary embodiment, the tethering element remains connected to at least two points of attachment 106. Of course, tethering elements 66 are capable of being secured to more than two points to accordingly vary the volume of the air bag cushion. Such points of attachment 106 provide for continued restraint of the air bag cushion. This is caused by the tethering element 66 even after the operative length is allowed to fully expand. Namely, the tethering element 66 continues to contour the profile of the air bag cushion 20 even with an enhanced operating length provided by the second state. The material forming the tethering element 66 and the releasable element 68 is preferably of pliable nature such as a woven or knitted textile having a construction resistant to substantial elongation upon the application of tensile forces. A woven structure of NYLON yarns is an example of such a material.

The movement of the plunger element within the support structure also causes the vent-blocking device 58 to slide within guide channel 92 such that the vent-blocking device closes or blocks vent openings 56. In the illustrated embodiment, tether-blocking-device 88, and vent-blocking-device 58 are arranged in a substantially "L" shaped cross sectional profile when a portion of the tether-blocking-device 88 does not abut retaining stud 104. Further, the tether-blocking-device 88, vent-blocking-device 58, and retaining stud 104 are arranged in a substantially "Z" shaped cross sectional profile when a portion of the tether-blocking-device 88 does abut retaining stud 104. Of course, other profiles and configurations of retaining stud 104 and tether-blocking-device 88 and vent-blocking-device 58 are contemplated in accordance with the present disclosure.

As illustrated, such vent openings 56 are normally in fluid communication with gas discharge ports 50 generally surrounding the diffuser portion 52 of the inflator. The vent-blocking-device is moveable within the second guide channel 92 in order to close or block the inflator vent openings upon activation of initiating device 76 which cause vent blocking device 58 to slide in the guide channel.

The operation of the vent-blocking-device 58 is illustrated with reference to Figure 2. Here, vent-blocking-device 58 is shown in an open or first position in solid lines with vent openings 56 uncovered to direct a portion of the generated gas away from air bag cushion 20. Alternatively, the vent-blocking-device 58 is shown in a closed or second position in phantom lines with the vent-blocking-device blocking vent openings 56 thereby directing a larger portion of the generated inflator gas to inflate the air bag cushion.

In the illustrated exemplary embodiment, prior to activation of inflator 18 the air bag cushion 20 is stored in the housing in a folded condition. In addition, prior to activation of the inflator 18, the tether-blocking-device 88 as well as the vent-blocking-device 58 are held in a first position by shear feature 94 such that retaining stud 104 and tether-blocking-device 88 hold releasable element 68 in place. The vent-blocking-device 58 is in a non-blocking position (e.g., normally open) thereby permitting egress of inflator gas outwardly from the housing. As an alternative, the tether system and the venting system are individually activated by a control system wherein activation of one does not necessarily mean activation of the other. Further, it is contemplated for the vent-blocking-device 58 to be in a blocking position (e.g., normally closed) thereby preventing egress of inflator gas outwardly from the housing.

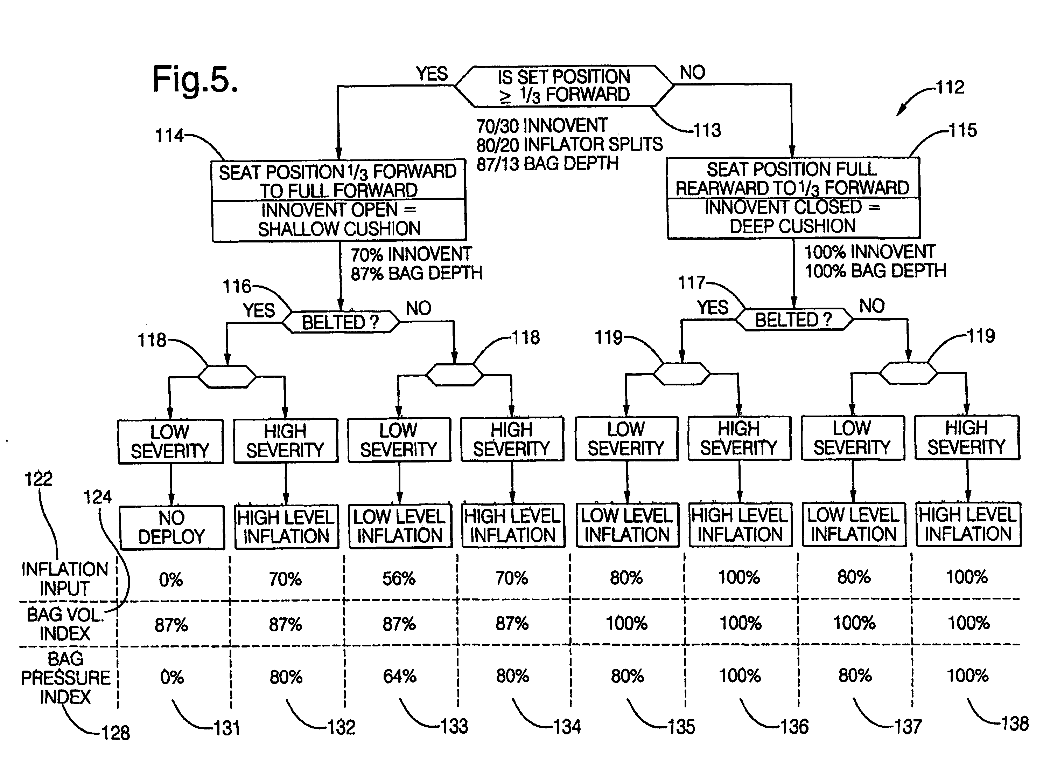

Thus, the module 14 comprising the dual stage inflator 18, the variable inflator vent system 54 and the variable tether system 60 provides three means to customize or tailor the inflation level within the inflatable cushion 20. The control strategy of these three means can be adapted to the particular vehicle, the activation event, the environmental conditions, conditions of the seating structure 12, and the like. Exemplary embodiments of control algorithms for controlling the air bag module are illustrated in Figures 5-7. Of course it should be recognized that other methods of controlling the module are contemplated.

Referring now to Figure 5, an exemplary embodiment of portions of a control algorithm 112 for controlling the air bag module is illustrated. Control algorithm 112 receives inputs from a plurality of sensors relating to the state of the vehicle and component parts of the same. In response to these inputs a control module and/or a sensing-and-diagnostic module determines whether the airbag should be deployed and what configuration the various schemes of the airbag activity devices are employed. Accordingly, and based upon input data control algorithm 112 will vary the level of inflation by controlling the initiators, the variable venting system, and the variable tether system to provide a simple, inexpensive, and reliable way to adapt the level of deployment to the conditions that are indicative of the various inputs. Once the sensing-and-diagnostic module 22 detects an activation event, the control algorithm 112 determines which of the various systems within the air bag module are to be activated / used and the configuration of the same.

Control algorithm 112 in this embodiment determines whether the integrated variable vent system 54 and the variable tether system 60 are to be activated. Specifically, decision node 113 makes its decision based on the various inputs including the position of seating structure 12. The inputs are detected and inputted into the algorithm by seat position sensor 26, optical scanner 28, seat recline sensor 32, and/or combinations thereof.

For example, if seating structure 12 is between a full forward position and a one-third forward position (e.g., if the seating structure is close to the air bag module 14), then decision node 113 does not activate the variable vent system 54 and the variable tether system 60. In this instance, the variable venting system 54 directs 70% of the generated inflation gas and the releasable element 68 retrains the cushion to the first expanded state 62. Thus, less inflation gas is provided to the cushion 20 and the cushion is retained to a lesser degree than provided by the second expanded state 64.

However, if the seating structure 12 is between a one-third forward position and a full rearward position (e.g., if the seating structure is further away from the air bag module 14), then the decision node 113 activates the variable vent system 54 and variable tether system 60 by way of ignition of the initiating device 76. In this instance, the variable venting system 54 directs 100% of the generated inflation gas to the cushion 20, and the releasable element 68 is released such that the cushion is opens to the second expanded state 64. Thus, a larger amount of inflation gas is provided to the cushion 20, and the cushion is allowed to expand farther than provided by the first expanded state 62. It is noted that variable venting system 54 and releasable element 68 are capable of being independently activated by signals generated by control algorithm 112.

Next or simultaneously, the control algorithm 112 determines whether the seat belt structures are secured (e.g., buckled is inserted into its corresponding clasp). Specifically, a decision node 116 or 117 depending on the result of node 113 determines whether the seat belts are secured. This determination is made by the inputs received from the seat belt detection sensors 34.

Then or again simultaneously, control algorithm 112 determines at a corresponding decision node 118 or 119 whether the activation event detected by the sensing-and-diagnostic module 22 requires a high level of inflation or a low level of inflation.

Control algorithm 112 provides the inputs or signals to the air bag module to provide the inflation level corresponding to the results of decision nodes 113 and 116-119. Accordingly, the control algorithm controls the activation of the air bag module 14 to provide five discrete inflation input levels (0%, 56%, 70%, 80%, and 100%) based on seat belt usage, the activation event, and position of seating structure 12.

The high inflation level, which is caused by igniting the first and second generators, corresponds to a high activation event level. During a low inflation level, only the second generator is ignited.

In the embodiment of Figure 5, an air bag pressure index or inflation level 128 within cushion 20 is determined from the inflation input 122 and the air bag volume index 124. The inflation input 122 is proportional to the quantity of inflation gas generated by the inflator 18 multiplied by the quantity of inflation gas directed to the cushion 20 by the variable venting system. Thus, the inflation input 122 is dependant on the state of the variable venting system 54 and on the state with which the dual stage inflator 18 is operated, if at all. The air bag volume index 124 is dependant on the state of the variable tether system 60, namely the first expanded state 62 or second expanded state 64. The air bag pressure index 128 is determined by dividing the inflation input 122 by the bag volume index 124.

Accordingly, the result of the control algorithm 112 is the deployment of the air bag module 14 in such a manner to adapt or customize the air bag pressure index 128 to a desired level that is based in part on seat position, seat belt usage, and activation event level. In the example of Figure 5, the control algorithm 112 results in eight different deployment scenarios, each having an air bag pressure index 128 commensurate in magnitude to the seat position, seat belt usage, and activation event level.

Deployment scenarios 131-138 are each described below with respect to their resultant air bag pressure indexes 128. Deployment scenarios 131-134 represent the output when the first decision node 113 does not activate the variable vent system 54 and release the variable tether system 60 (block 114). Deployment scenarios 135-138 represent the output of the when the first decision node 113 activates the variable vent system 54 and the variable tether system 60 (block 115).

Referring back now to deployment scenario 131, the same relates to the following inputs: seat belt in use, low activation event level, and seating structure 12 is between a full forward position and a one-third forward position. Here, the algorithm does not activate the inflator 18. The inflation input 122 is equal to zero because the amount to be directed to the cushion is 70% but the quantity of gas generated is zero (e.g., 70% x 0%). The bag volume index 124 is 87% since the variable tether system 60 is not released. Therefore, deployment scenario 131 provides an air bag pressure index 128 equal to zero (e.g., 0% ö 87%).

In deployment scenario 132, the same relates to the following inputs: seat belt in use, seating structure 12 is between a full forward position and a one-third forward position, but activation event level is high. Here, the algorithm activates the inflator 18 to have a high inflation level (e.g., produces 100% of the inflation gas). Thus, in this instance the air bag module 14 ignites both the first and second generators of the inflator 18. The inflation input 122 is equal to 70% because the quantity of inflation gas from the inflator 18 is 100% and the amount directed by venting system 54 is 70% (e.g., 70% x 100%). Again, the bag volume index 124 is 87%. Therefore, the deployment scenario 132 provides an air bag pressure index 128 equal to 80% (e.g., 70% ö 87%).

In deployment scenario 133, the seat belt is not in use, the activation event level is low, and seating structure 12 is between a full forward position and a one-third forward position. Here, the algorithm activates the inflator 18 at a low inflation level (e.g., produces 80% of the inflation gas). Thus, in this instance the air bag module 14 ignites only the propellant of second housing 40 of the inflator 18. The inflation input 122 is equal to 56% because the quantity of inflation gas from the inflator 18 is 80% and the amount directed by venting system 54 is 70% (e.g., 70% x 80%). Again, the bag volume index 124 is 87%. Therefore, deployment scenario 133 provides an air bag pressure index 128 equal to 64% (e.g., 56% ö 87%).

In deployment scenario 134, the seat belt is not in use, the activation event level is high, and seating structure 12 is between full forward position and a one-third forward position. Here, the algorithm activates the inflator 18 at a high inflation level (e.g., produces 100% of the inflation gas). Thus, in this instance the air bag module 14 ignites both the propellant of both the first and the second housings of the inflator 18. The inflation input 122 is equal to 70% because the quantity of inflation gas from the inflator 18 is 100% and the amount directed by venting system 54 is 70% (e.g., 70% x 100%). Again, the bag volume index 124 is 87%. Therefore, deployment scenario 134 provides an air bag pressure index 128 equal to 80% (e.g., 70% ö 87%).

In deployment scenario 135, the seat belt is in use, the activation event level is low, and seating structure 12 is between a one-third forward position and a full rearward position. Here, the algorithm activates initiating device 76 to close the vent 58 and to release the releasable element 68, while the inflator 18 is configured to be at a low inflation level (e.g., produces 80% of the inflation gas). Thus, in this instance the air bag module 14 ignites the propellant of second housing 40 of the inflator 18, and initiating device 76. The inflation input 122 is equal to 80% because the quantity of inflation gas from the inflator 18 is 80% and the amount directed by venting system 54 is 100% (e.g., 100% x 80%). Here, the bag volume index 124 is 100% since the variable tether system 60 is activated (e.g., released). Therefore, deployment scenario 135 provides an air bag pressure index 128 equal to 80% (e.g., 80% ö 100%).

In deployment scenario 136, the seat belts are in use, the activation event level is high, and seating structure 12 is between a one-third forward position and a full rearward position. Here, the algorithm activates initiating device 76 to close the vent 58 and to release the releasable element 68. In addition, the algorithm activates the inflator 18 at a high inflation level (e.g., produces 100% of the inflation gas). Thus, in this instance the air bag signals are provided to ignite both the first and second generators, and initiating device 76. The inflation input 122 is equal to 100%, because the quantity of inflation gas from the inflator 18 is 100% and the amount directed by venting system 54 is 100%. Again, the bag volume index 124 are 100%. Therefore, deployment scenario 136 provides an air bag pressure index 128 equal to 100% (e.g., 100% ö 100%).

In deployment scenario 137, the seat belts are not in use, the activation event level is low, and seating structure 12 is between a one-third forward position and a full rearward position. Here, the algorithm activates initiating device 76 to close the vent 58 and to release the releasable element 68, while the inflator 18 is activated to provide a low inflation level (e.g., produces 80% of the inflation gas). Thus, in this instance the propellant of second housing 40 of the inflator 18 is ignited as well as initiating device 76. The inflation input 122 is equal to 80% because the quantity of inflation gas from the inflator 18 is 80% and the amount directed by venting system 54 is 100%. Again, the bag volume index 124 is 100%. Therefore, deployment scenario 137 provides an air bag pressure index 128 equal to 80% (e.g., 80% ö 100%).

In deployment scenario 138, the seat belts are not in use, the activation event level is high, and seating structure 12 is between a one-third forward position and a full rearward position. Here, the algorithm activates initiating device 76 to close the vent 58 and to release the releasable element 68, while also activating the inflator for a high inflation level (e.g., produces 100% of the inflation gas). Thus, in this instance the first generator, the second generator, and the initiating device 76 are ignited. The inflation input 122 is equal to 100% because the quantity of inflation gas from the inflator 18 and the amount directed by venting system 54 are 100%. Again, the bag volume index 124 is 100%. Therefore, deployment scenario 138 provides an air bag pressure index 128 equal to 100% (e.g., 100% ö 100%).

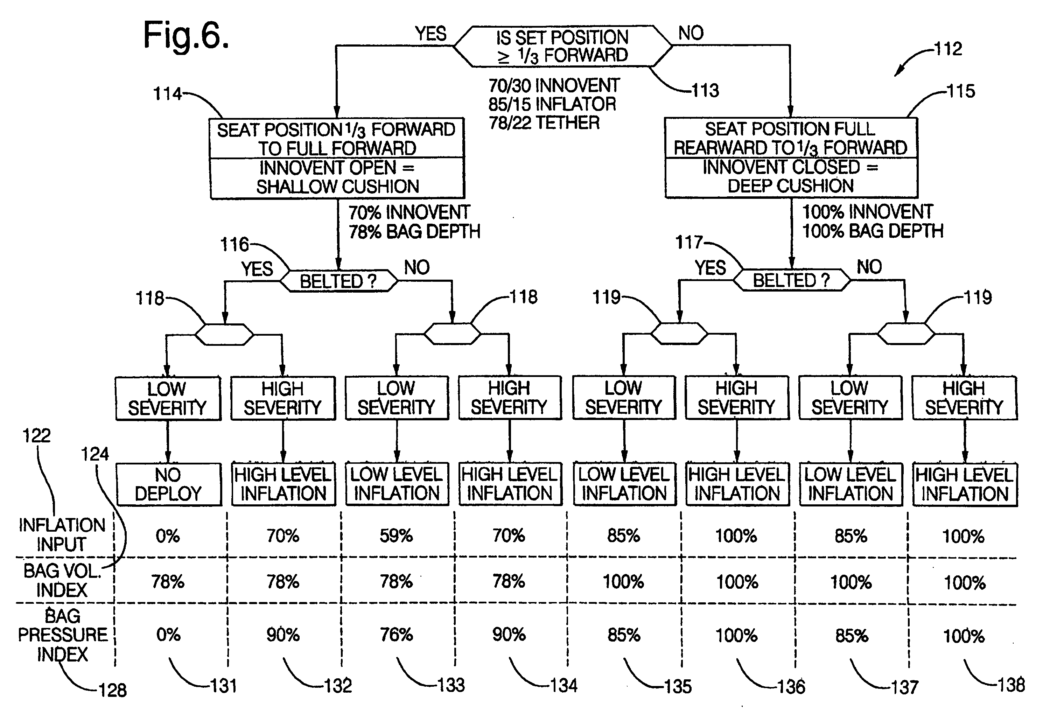

An alternative embodiment of the control algorithm of the present disclosure is illustrated in Figure 6. Figure 6 illustrates how the algorithm adapts the air bag pressure index 128 to the various conditions being sensed. In this embodiment, the dual stage inflator 18, the variable venting system 54, and the variable tether system 60 have ratios different from those described with respect to Figure 5. -

Specifically, the dual stage inflator 18 is adapted to provide about 85% of the inflator gas under the low inflation levels (e.g., ignition of only the propellant of the second housing 40) and to provide 100% of the inflator gas under the high inflation conditions (e.g., ignition of the propellant of both the first and second generators). The variable inflator vent system 54 is configured to allow about 70% of the generated inflator gas to be directed to the cushion when vent openings 56 are open, and about 100% when the vent-blocking-device 58 covers the openings 56. The variable tether system 60 provides about 78% of the cushion 20 depth when the tether-blocking-device 88 abuts the retaining stud 104, and about 100% of the cushion 20 depth when the tether-blocking-device 88 is released from the retaining stud 104.

In deployment scenario 131 of Figure 6, the amount to be directed to the cushion is 70% but the quantity of gas generated is zero. Thus, the inflation input 122 is equal to zero. The bag volume index 124 is 78% since the variable tether system 60 is not released. Therefore, in deployment scenario 131 provides an air bag pressure index 128 equal to zero (e.g., 0% + 78%).

In deployment scenarios 132 and 134 of Figure 6, the quantity of inflation gas from the inflator 18 is 100% and the amount directed by venting system 54 is 70%. Thus, the inflation input 122 is equal to 70%. Again, the bag volume index 124 is 78%. Therefore, deployment scenario 132 provides an air bag pressure index 128 equal to 89% (e.g., 70% ö 78%).

In deployment scenario 133 of Figure 6, the quantity of inflation gas from the inflator 18 is 85% and the amount directed by venting system 54 is 70%. Thus, the inflation input 122 is equal to 59%. The bag volume index 124 is 78%. Therefore, deployment scenario 133 provides an air bag pressure index 128 equal to 76% (e.g., 59% ö 78%).

In deployment scenarios 135 and 137 of Figure 6, the quantity of inflation gas from the inflator 18 is 85% and the amount directed by venting system 54 is 100%. Thus, the inflation input 122 is equal to 85% (e.g., 100% x 85%). Here, the bag volume index 124 is 100% since the variable tether system 60 is released. Therefore, deployment scenario 135 provides an air bag pressure index 128 equal to 85% (e.g., 85% ö 100%).

In deployment scenarios 136 and 138 of Figure 6, the inflation input 122 is equal to 100% since the quantity of inflation gas from the inflator 18 is 100% and the amount directed by venting system 54 is 100%. Again, the bag volume index 124 are 100%. Therefore, deployment scenario 136 provides an air bag pressure index 128 equal to 100% (e.g., 100% + 100%).

It should be recognized that the control algorithm is resident upon a microcontroller located in the vehicle. The microcontroller may be the same unit used to control or operate the sensing and diagnostic module. In addition, the control algorithm is capable of being operated independently of the sensing and diagnostic module as well as simultaneously.

As provided by example above, air bag module 14 as controlled by algorithm 112 provides for at least five discrete levels of air bag pressures index 128 that are tailored to specific conditions encountered. In the first example, the discrete levels include air bag pressures indexes 128 of zero at deployment condition 131, sixty four percent at deployment condition 133, eighty percent at deployment conditions 132, 134, 135, and 137, and one hundred percent at deployment conditions 136 and 138. However, in the second example, the discrete levels include air bag pressures indexes 128 of zero at deployment condition 131, eighty-nine percent at deployment conditions 132 and 134, seventy-six percent at deployment condition 133, eighty-five percent at deployment conditions 135 and 137, and one hundred percent at deployment conditions 136 and 138.

The algorithm provides a simple, inexpensive, and reliable way to tailor the inflatable cushion 20 to the sensed conditions. The discrete levels of air bag pressure 128 are provided with a dual stage inflator 18, a variable tether system 60, and a variable venting system 54. The control algorithm 112 activates the two stages of the inflator as well as the variable tether and venting systems depending on the sensed conditions. The control algorithm 112 does not require a complex logic tree or multiple control signals during the activation event to integrate the air bag pressures 128 to the activation event level.

Algorithm 112 selects a discrete inflation level using conventional vehicle inputs such as seat position, seat belt usage, and activation event level to customize the air bag inflation pressure 128 to the various conditions and/or scenarios. When the seating structure 12 is away from the air bag module 14 (e.g., rear position), the air bag module activates the variable venting system 54 and the variable tether system 60 to ensure that all of the gas generated by the dual stage inflator 18 goes to air bag and that tether is extended. However, when the seating structure 12 close to the air bag module 14, the air bag module does not activate the variable venting system 54 or the variable tether system 60 to ensure that some of the gas generated by the dual stage inflator is vented away from the cushion 20 and that tether is restrained. In other words, when the seating structure 12 is close to the air bag module 14, the cushion is shallower with less pressure, but when the seating structure 12 is far from the air bag module 14, the cushion is deeper and fuller. By enabling two air bag profiles 62 and 64, two inflation venting conditions, and two quantities of generated inflation gas, the air bag module 14 provides depths and pressures that are more closely tied to the conditions encountered.

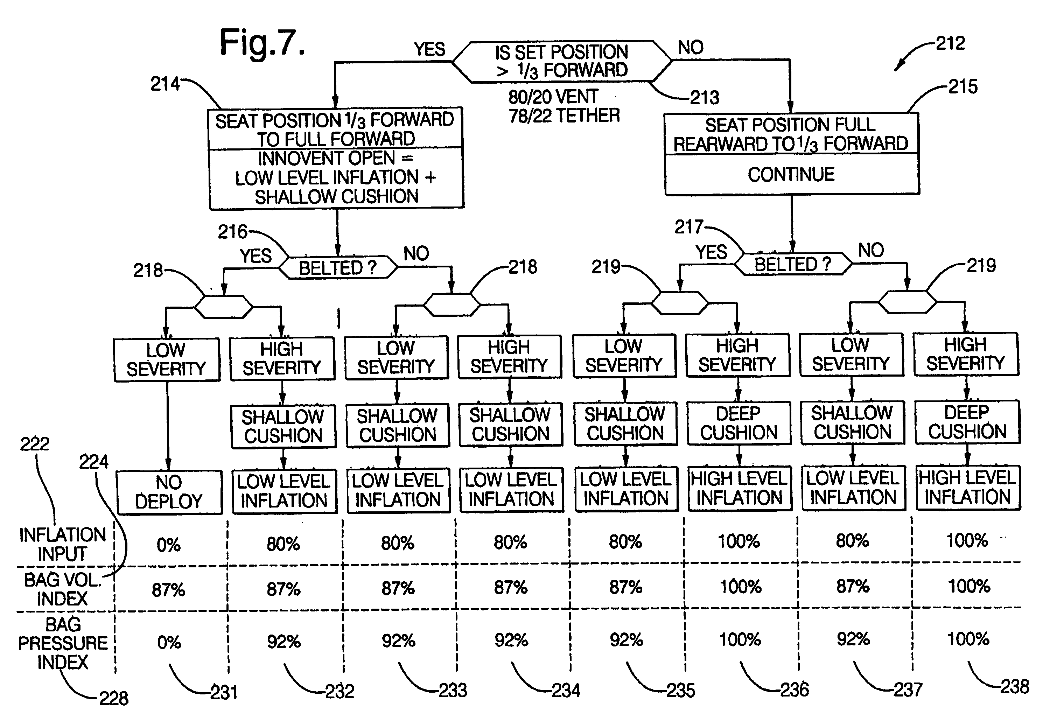

An alternative embodiment of a control algorithm 212 of the present disclosure is illustrated in Figure 7. Figure 7 illustrates how the algorithm adapts the air bag pressure index 228 to the various conditions being sensed. In this embodiment, the inflator 18 is a single stage inflator capable of generating 100% of the inflation gas at all times. Here, the variable venting system 54, and the variable tether system 60 have ratios different from those described with respect to Figures 5 and 6.

Specifically, the inflator 18 is adapted to provide about 100% of the inflator gas under the all inflation conditions. The variable inflator vent system 54 is configured to allow about 80% of the generated inflator gas to be directed to the cushion when vent openings 56 are open, and about 100% when the vent-blocking-device 58 covers the openings 56. The variable tether system 60 provides about 87% of the cushion 20 volume when the tether-blocking-device 88 abuts the retaining stud 104, and about 100% of the cushion 20 volume when the tether-blocking-device 88 is released from the retaining stud 104.

Accordingly, the result of the control algorithm 212 is the deployment of the air bag module 14 in such a manner to adapt or customize the air bag pressure index 228 to a desired level that is based in part on seat position, seat belt usage, and activation event level. In the example of Figure 7, the control algorithm 212 results in eight different deployment scenarios, each having an air bag pressure index 228 commensurate in magnitude to the seat position, seat belt usage, and activation event level.

Specifically, decision node 213 makes its decision based on the various inputs including the position of seating structure 12. The inputs are detected and inputted into the algorithm by seat position sensor 26, optical scanner 28, seat recline sensor 32, and/or combinations thereof.

For example, if seating structure 12 is between a full forward position and a one-third forward position (e.g., if the seating structure is close to the air bag module 14), then decision node 213 does not activate the variable vent system 54 and the variable tether system 60. In this instance, the variable venting system 54 directs 80% of the generated inflation gas, and the releasable element 68 retrains the cushion to the first expanded state 62. Thus, less inflation gas is provided to the cushion 20 and the cushion is retained to protrude into the vehicle 10 to a lesser degree than provided by the second expanded state 64.

However, if the seating structure 12 is between a one-third forward position and a full rearward position (e.g., if the seating structure is further away from the air bag module 14), then the decision node 213 waits to determine the activation state of the variable vent system 54 and variable tether system 60.

Next or simultaneously, the control algorithm 212 determines whether the seat belt structures are secured (e.g., buckled is inserted into its corresponding clasp). Specifically, a decision node 216 or 217 depending on the result of node 213 determines whether the seat belts are secured. This determination is made by the inputs received from the seat belt detection sensors 34.

Then or simultaneously, control algorithm 212 determines at a corresponding decision node 218 or 219 whether the activation event detected by the sensing-and-diagnostic module 22 is a high activation event level or a low activation event level.

At decision node 218, the control algorithm 212 determines whether or not to activate the inflator 18. If the activation event level at decision node 218 is low, and the condition at decision node 216 is belted, then decision node 218 does not activate the inflator. However, if the activation event level at decision node 218 is high, and the condition at decision node 216 is belted, then decision node 218 activates the inflator. Similarly, if the activation event level at decision node 218 is high or low, and the condition at decision node 216 is un-belted, then decision node 218 activates the inflator.

At decision node 219, the control algorithm 212 determines whether to activate the variable vent system 54 and the variable tether system 60. If the activation event level at decision node 219 is high, then decision node 219 activates the variable vent system 54 and the variable tether system 60. In this instance the variable venting system 54 directs 100% of the generated inflation gas to the cushion, and the releasable element 68 releases the cushion to the second expanded state 64. Thus, more inflation gas is provided to the cushion 20 and the cushion is has a deeper volume than provided by the first expanded state 62.

However, if the activation event level at decision node 219 is low, then decision node 219 does not activate the variable vent system 54 and the variable tether system 60. In this instance, the variable venting system 54 directs 80% of the generated inflation gas, and the releasable element 68 retrains the cushion to the first expanded state 62. Thus, less inflation gas is provided to the cushion 20 and the cushion is retained to protrude into the vehicle 10 to a lesser degree than provided by the second expanded state 64.

Control algorithm 212 provides the inputs or signals to the air bag module to provide the inflation level corresponding to the results of decision nodes 213 and 216 -219. Namely, the algorithm determines whether or not to activate the inflator and whether or nor to activate the variable venting system 54 and the variable tether system 60. Accordingly, the inflation level is based on seat belt usage, the activation event, and position of seating structure 12.

Accordingly, the control algorithm controls the activation of the air bag module 14 to provide three discrete inflation input levels (0%, 80%, and 100%).

Deployment scenarios 231-238 are each described below with respect to their resultant air bag pressure indexes 228. Deployment scenarios 231-234 represent the output when the first decision node 213 does detect the seat position to be greater than one-third forward. Deployment scenarios 235-238 represent the output when the first decision node 213 does not detect the seat position to be greater than one-third forward.

Referring back now to deployment scenario 231, the same relates to the following inputs: seat belt in use, low activation event level, and seating structure 12 is between a full forward position and a one-third forward position. Here, the algorithm does not activate the inflator 18, the variable vent system 54 or the variable tether system 60. The inflation input 222 is equal to zero because the amount to be directed to the cushion is 80% but the quantity of gas generated is zero (e.g., 80% x 0%). The bag volume index 124 is 87% since the variable tether system 60 is not released. Therefore, deployment scenario 231 provides an air bag pressure index 228 equal to zero (e.g., 0% ö 87%).

In deployment scenario 232, the same relates to the following inputs: seat belt in use, seating structure 12 is between a full forward position and a one-third forward position, but activation event level is high. Here, the algorithm activates the inflator 18, but does not activate the variable vent system 54 or the variable tether system 60. Thus, inflation input 222 is equal to 80% because the quantity of inflation gas from the inflator 18 is 100% and the amount directed by venting system 54 is 80% (e.g., 80% x 100%). The bag volume index 224 is 87%. Therefore, the deployment scenario 232 provides an air bag pressure index 228 equal to 91% (e.g., 80% ö 87%).

In deployment scenario 233, the same relates to the following inputs: seat belt not in use, seating structure 12 is between a full forward position and a one-third forward position, and a low activation event level. Here, the algorithm activates the inflator 18, but does not activate the variable vent system 54 or the variable tether system-60. Thus, the deployment scenario 233, like deployment scenario 232 above, provides an air bag pressure index 228 equal to 91% (e.g., 80% + 87%).

In deployment scenario 234, the same relates to the following inputs: seat belt not in use, seating structure 12 is between a full forward position and a one-third forward position, and a high activation event level. Here, the algorithm activates the inflator 18, but does not activate the variable vent system 54 or the variable tether system 60. Thus, the deployment scenario 234, like deployment scenarios 232 and 233 above, provides an air bag pressure index 228 equal to 91% (e.g., 80% ö 87%).

In deployment scenario 235, the same relates to the following inputs: seat belt in use, seating structure 12 is between a one-third forward position and a full rearward position, and a low activation event level. Here, the algorithm activates the inflator 18, but does not activate the variable vent system 54 or the variable tether system 60. Thus, the deployment scenario 235, like deployment scenarios 232-234 above, provides an air bag pressure index 228 equal to 91% (e.g., 80% ö 87%).

In deployment scenario 236, the same relates to the following inputs: seat belt in use, seating structure 12 is between a one-third forward position and a full rearward position, and a high activation event level. Here, the algorithm activates the inflator 18, the variable vent system 54, and the variable tether system 60. Thus, inflation input 222 is equal to 100% because the quantity of inflation gas from the inflator 18 is 100% and the amount directed by venting system 54 is 100% (e.g., 100% x 100%). The bag volume index 224 is 100%. Therefore, the deployment scenario 236 provides an air bag pressure index 228 equal to 100% (e.g., 100% ö 100%).

In deployment scenario 237, the same relates to the following inputs: seat belt in not use, seating structure 12 is between a one-third forward position and a full rearward position, and a low activation event level. Here, the algorithm activates the inflator 18, but does not activate the variable vent system 54 or the variable tether system 60. Thus, the deployment scenario 235, like deployment scenarios 232-235 above, provides an air bag pressure index 228 equal to 91% (e.g., 80% ö 87%).

In deployment scenario 238, the same relates to the following inputs: seat belt in not use, seating structure 12 is between a one-third forward position and a full rearward position, and a high activation event level. Here, the algorithm activates the inflator 18, the variable vent system 54, and the variable tether system 60. Thus, the deployment scenario 235, like deployment scenario 236 above, provides an air bag pressure index 228 equal to 100% (e.g., 100% + 100%).

As provided by example above, air bag module 14 as controlled by algorithm 212 provides for three discrete levels of air bag pressures index 228 that are tailored to specific conditions encountered. In the example provided, the discrete levels include air bag pressures indexes 228 of zero at deployment condition 231, ninety-one percent at deployment conditions 232-235 and 237, and one hundred percent at deployment conditions 236 and 238.

The algorithm provides a simple, inexpensive, and reliable way to tailor the inflatable cushion 20 to the sensed conditions. The discrete levels of air bag pressure 228 are provided with a single stage inflator 18, a variable tether system 60, and a variable venting system 54. The control algorithm 212 activates the inflator as well as the variable tether and venting systems depending on the sensed conditions. The control algorithm 212 does not require a complex logic tree or multiple control signals during the activation event to integrate the air bag pressures 228 to the activation event level.

Algorithm 212 selects a discrete inflation level using conventional vehicle inputs such as seat position, seat belt usage, and activation event level to customize the air bag inflation pressure 228 to the various conditions and/or scenarios.

It should also be noted that the terms "first", "second", and "third", and the like may be used herein to modify elements performing similar and/or analogous functions. These modifiers do not imply a spatial, sequential, or hierarchical order to the modified elements unless specifically stated.

It is intended that the invention not be limited to the particular embodiment disclosed as the best mode contemplated for carrying out this invention, but that the invention will include all embodiments falling within the scope of the appended claims.

## Claims

1. An air bag pressure control system for use in a vehicle (10), comprising:
a housing (16) being configured for installment in the vehicle in a selected spatial relation to a seating structure (12);
an inflatable cushion (20) stored in an undeployed position in said housing, said inflatable cushion being configured for deployment towards said seating structure;
a dual stage inflator (18) stored in said housing in fluid communication with said inflatable cushion, said dual stage inflator being configured to generate a quantity of inflation gas being in a range defined by a first quantity of inflation gas and a second quantity of inflation gas to deploy said inflatable cushion from said housing towards said seating structure;
a vent opening (56) being formed in said housing, said vent opening being configured to selectively direct a portion of said first quantity of inflation gas or said second quantity of inflation gas towards or away from said inflatable cushion;
a sensing and diagnostic module (22) for detecting an activation event level;
a tether element (68) being configured to selectively retain said inflatable cushion in a profile being in a range defined by a first expanded profile (62) and a second expanded profile (64);
a control algorithm (112) adapted to tailor an inflation level of said inflatable cushion during deployment by controlling said dual stage inflator to generate either said first quantity of inflation gas or said second quantity of inflation gas, by controlling said vent opening to direct said portion towards or away from said inflatable cushion, by controlling said tether element to retain said inflatable cushion in said first expanded profile or said second expanded profile, and combinations thereof;
wherein said sensing and diagnostic module detects a seat position of said seating structure with respect to said housing and a seat belt usage; and wherein said control algorithm provides:
a first discrete inflation level (131) if said event level is a low level, said seat position is a first position, and said seat belt usage is a belted stage;
a second discrete inflation level (132, 134) if said event level is a high level, said seat position is said first position, and said seat belt usage is either said belted state or a un-belted state;
a third discrete inflation level (133) if said level is said low level, said seat position is said first position, and said seat belt usage is said un-belted state;
a fourth discrete inflation level (135, 137) if said event level is said low level, said seat position is a second position, and said seat belt usage is either said belted state or said un-belted state; and
a fifth discrete inflation level (136, 138) if said event level is said high level, said seat position is said second position, and said seat belt usage is either said belted state or said un-belted state.

2. The air bag pressure control system as in claim 1, wherein said control algorithm tailors said inflation level of said inflatable cushion during deployment according to said activation event level, said seat position, and said seat belt usage.

3. The air bag pressure control system as in claim 1, further comprising an actuation mechanism (70) moveable between a first position and a second position, said first position being configured to direct said portion away from said inflatable cushion and to selectively retain said inflatable cushion in said first expanded profile, said second position being configured to direct said portion towards from said inflatable cushion and to release said inflatable cushion to said second expanded profile.

4. The air bag pressure control system as in claim 3, wherein said control algorithm is configured to select said inflation level from at least five discrete inflation levels.

5. The air bag pressure control system as in claim 3, wherein said actuation mechanism is moved from said first position to said second position by an initiating device (76).

6. The air bag pressure control system as in claim 5, wherein said initiating device is a pyrotechnic squib or a pneumatic actuator.

7. The air bag pressure control system as in claim 1, wherein said control algorithm is configured to select said inflation levels from at least three discrete inflation levels.

8. The air bag pressure control system as in claim 1, wherein said activation event level being in a range defined by a high level and a low level, said seat position in a range defined by a first position and a second position with respect to said housing, and said seat belt usage being in a range defined by a belted state and an un-belted state.

9. The air bag pressure control system as in claim 8, wherein said first position is from a one-third forward position and a full forward, and said second position is from a full rearward position and to said one-third forward position.

10. The air bag pressure control system as in claim 1, wherein said first discrete inflation level is zero.

11. The air bag pressure control system as in claim 1, wherein said second discrete inflation level is provided by said dual stage inflator generating said second quantity of inflation gas, said vent opening diffusing said portion away from said inflatable cushion, and said tether element retaining said inflatable cushion in said first expanded profile.

12. The air bag pressure control system as in claim 1, wherein said third discrete inflation level is provided by said dual stage inflator generating said first quantity of inflation gas, said vent opening diffusing said portion away from said inflatable cushion, and said tether element retaining said inflatable cushion in said first expanded profile.

13. The air bag pressure control system as in claim 1, wherein said fourth discrete inflation level is provided by said dual stage inflator generating said first quantity of inflation gas, said vent opening diffusing said portion towards said inflatable cushion, and said tether element releasing said inflatable cushion to said second expanded profile.

14. The air bag pressure control system as in claim 1, wherein said fifth discrete inflation level is provided by said dual stage inflator generating said second quantity of inflation gas, said vent opening diffusing said portion towards said inflatable cushion, and said tether element releasing said inflatable cushion to said second expanded profile.

## Patentansprüche

1. Airbag-Drucksteuerungssystem zur Verwendung in einem Fahrzeug (10), das umfasst:
ein Gehäuse (16), das für einen Einbau in dem Fahrzeug in einem ausgewählten räumlichen Verhältnis mit einer Sitzstruktur (12) eingerichtet ist;
ein aufblasbares Kissen (20), das in einer nicht entfalteten Position in dem Gehäuse aufbewahrt ist, wobei das aufblasbare Kissen für eine Entfaltung in Richtung der Sitzstruktur eingerichtet ist;
einen Zwei-Stufen-Gasgenerator (18), der in dem Gehäuse in fluidmäßiger Verbindung mit dem aufblasbaren Kissen aufbewahrt ist,
wobei der Zwei-Stufen-Gasgenerator derart eingerichtet ist, dass er eine Menge von Aufblasgas in einem Bereich, der durch eine erste Menge von Aufblasgas und eine zweite Menge von Aufblasgas definiert ist, erzeugt, um das aufblasbare Kissen von dem Gehäuse in Richtung der Sitzstruktur zu entfalten;
eine Entlüftungsöffnung (56), die in dem Gehäuse ausgebildet ist, wobei die Entlüftungsöffnung derart eingerichtet ist, dass sie einen Teil der ersten Menge von Aufblasgas oder der zweiten Menge von Aufblasgas selektiv in Richtung zu oder weg von dem aufblasbaren Kissen leitet;
ein Abtast- und Diagnosemodul (22) zur Detektion eines Aktivierungsereignis-Niveaus;
ein Halteseilelement (68), das derart eingerichtet ist, dass es das aufblasbare Kissen in einem Profil, das in einem durch ein erstes Expansionsprofil (62) und ein zweites Expansionsprofil (64) definierten Bereich liegt, selektiv zurückhält;
einen Steueralgorithmus (112), der derart eingerichtet ist, dass er ein Aufblasniveau des aufblasbaren Kissens während des Entfaltens durch Steuern des Zwei-Stufen-Gasgenerators anpasst, indem er den Zwei-Stufen-Gasgenerator steuert, um entweder die erste Menge von Aufblasgas oder die zweite Menge von Aufblasgas zu erzeugen, indem er die Entlüftungsöffnung steuert, um den Teil in Richtung zu oder weg von dem aufblasbaren Kissen zu leiten, indem er das Halteseilelement steuert, um das aufblasbare Kissen in dem ersten Expansionsprofil oder dem zweiten Expansionsprofil zurückzuhalten, und durch Kombinationen aus diesen;
wobei das Abtast- und Diagnosemodul eine Sitzposition der Sitzstruktur in Bezug auf das Gehäuse und eine Sicherheitsgurtverwendung detektiert; und wobei der Steueralgorithmus
ein erstes diskretes Aufblasniveau (131) bereitstellt, wenn das Ereignisniveau ein niedriges Niveau ist, die Sitzposition eine erste Position ist und die Sicherheitsgurtverwendung ein angegurteter Zustand ist;
ein zweites diskretes Aufblasniveau (132, 134) bereitstellt, wenn das Ereignisniveau ein hohes Niveau ist, die Sitzposition die erste Position ist und die Sicherheitsgurtverwendung entweder der angegurtete Zustand oder ein nicht angegurteter Zustand ist;
ein drittes diskretes Aufblasniveau (133) bereitstellt, wenn das Niveau ein niedriges Niveau ist, die Sitzposition die erste Position ist und die Sicherheitsgurtverwendung der nicht angegurtete Zustand ist;
ein viertes diskretes Aufblasniveau (135, 137) bereitstellt, wenn das Ereignisniveau das niedrige Niveau ist, die Sitzposition eine zweite Position ist, und die Sicherheitsgurtverwendung entweder der angegurtete Zustand oder der nicht angegurtete Zustand ist; und
ein fünftes diskretes Aufblasniveau (136, 138) bereitstellt, wenn das Ereignisniveau das hohe Niveau ist, die Sitzposition die zweite Position ist, und die Sicherheitsgurtverwendung entweder der angegurtete Zustand oder der nicht angegurtete Zustand ist.

2. Airbag-Drucksteuerungssystem nach Anspruch 1, wobei der Steueralgorithmus das Aufblasniveau des aufblasbaren Kissens während der Entfaltung gemäß dem Aktivierungsereignis-Niveau, der Sitzposition und der Sicherheitsgurtverwendung anpasst.

3. Airbag-Drucksteuerungssystem nach Anspruch 1, das ferner umfasst:
einen Betätigungsmechanismus (70), der zwischen einer ersten Position und einer zweiten Position beweglich ist, wobei die erste Position derart eingerichtet ist, dass sie den Teil von dem aufblasbaren Kissen weg leitet und das aufblasbare Kissen selektiv in dem ersten Expansionsprofil zurückhält, wobei die zweite Position derart eingerichtet ist, dass sie den Teil in Richtung des aufblasbaren Kissens leitet und das aufblasbare Kissen zu dem zweiten Expansionsprofil freigibt.

4. Airbag-Drucksteuerungssystem nach Anspruch 3, wobei der Steueralgorithmus derart eingerichtet ist, dass er das Aufblasniveau aus zumindest fünf diskreten Aufblasniveaus auswählt.

5. Airbag-Drucksteuerungssystem nach Anspruch 3, wobei der Betätigungsmechanismus durch eine Auslösevorrichtung (76) von der ersten Position in die zweite Position bewegt wird.

6. Airbag-Drucksteuerungssystem nach Anspruch 5, wobei die Auslösevorrichtung eine pyrotechnische Zündpille oder ein pneumatischer Aktuator ist.

7. Airbag-Drucksteuerungssystem nach Anspruch 1, wobei der Steueralgorithmus derart eingerichtet ist, dass er die Aufblasniveaus aus zumindest drei diskreten Aufblasniveaus auswählt.

8. Airbag-Drucksteuerungssystem nach Anspruch 1, wobei das Aktivierungsereignis-Niveau in einem durch ein hohes Niveau und ein niedriges Niveau definierten Bereich, die Sitzposition in einem durch eine erste Position und eine zweite Position in Bezug auf das Gehäuse definierten Bereich und die Sicherheitsgurtverwendung in einem durch einen angegurteten Zustand und einen nicht angegurteten Zustand definierten Bereich liegt.

9. Airbag-Drucksteuerungssystem nach Anspruch 8, wobei die erste Position aus einer 1/3 vorderen Position und einer ganz vorderen Position ist und die zweite Position aus einer ganz hinteren Position und zu der 1/3 vorderen Position ist.

10. Airbag-Drucksteuerungssystem nach Anspruch 1, wobei das erste diskrete Aufblasniveau 0 ist.

11. Airbag-Drucksteuerungssystem nach Anspruch 1, wobei das zweite diskrete Aufblasniveau von dem Zwei-Stufen-Gasgenerator bereitgestellt wird, der die zweite Menge von Aufblasgas erzeugt, wobei die Entlüftungsöffnung den Teil weg von dem aufblasbaren Kissen verteilt und das Halteseilelement das aufblasbare Kissen in dem ersten Expansionsprofil zurückhält.

12. Airbag-Drucksteuerungssystem nach Anspruch 1, wobei das dritte diskrete Aufblasniveau von dem Zwei-Stufen-Gasgenerator bereitgestellt wird, der die erste Menge von Aufblasgas erzeugt, wobei die Entlüftungsöffnung den Teil weg von dem aufblasbaren Kissen verteilt und das Halteseilelement das aufblasbare Kissen in dem ersten Expansionsprofil zurückhält.

13. Airbag-Drucksteuerungssystem nach Anspruch 1, wobei das vierte diskrete Aufblasniveau von dem Zwei-Stufen-Gasgenerator bereitgestellt wird, der die erste Menge von Aufblasgas erzeugt, wobei die Entlüftungsöffnung den Teil in Richtung des aufblasbaren Kissens verteilt und das Halteseilelement das aufblasbare Kissen zu dem zweiten Expansionsprofil freigibt.

14. Airbag-Drucksteuerungssystem nach Anspruch 1, wobei das fünfte diskrete Aufblasniveau von dem Zwei-Stufen-Gasgenerator bereitgestellt wird, der die zweite Menge von Aufblasgas erzeugt, wobei die Entlüftungsöffnung den Teil in Richtung des aufblasbaren Kissens verteilt und das Halteseilelement das aufblasbare Kissen zu dem zweiten Expansionsprofil freigibt.

## Revendications

1. Système de commande de pression de coussin gonflable à utiliser dans un véhicule (10), comprenant :
un boîtier (16) configuré pour être installé dans le véhicule en relation spatiale choisie par rapport à une structure de siège (12) ;
un coussin gonflable (20) stocké en position non déployée dans ledit boîtier, ledit coussin gonflable étant configuré pour se déployer en direction de ladite structure de siège :
un dispositif de gonflage à deux étages (18) stocké dans ledit boîtier en communication fluide avec ledit coussin gonflable, ledit dispositif de gonflage à deux étages étant configuré pour produire une quantité de gaz de gonflage dans une plage définie par une première quantité de gaz de gonflage et une deuxième quantité de gaz de gonflage afin de déployer ledit coussin gonflable à partir dudit boîtier en direction de ladite structure de siège ;
une ouverture de mise à l'air libre (56) formée dans ledit boîtier, ladite ouverture de purge étant configurée pour diriger sélectivement une partie de ladite première quantité de gaz de gonflage ou de ladite deuxième quantité de gaz de gonflage vers ledit coussin gonflable ou l'évacuer dudit coussin gonflable ;
un module de détection et de diagnostic (22) pour détecter un niveau d'événement d'activation ;
un élément d'attache (68) configuré pour retenir sélectivement ledit coussin gonflable dans un profil compris dans une plage définie par un premier profil de développement (62) et par un deuxième profil de développement (64) un algorithme de commande (112) fait pour adapter un niveau de gonflage dudit coussin gonflable durant le déploiement en commandant ledit dispositif de gonflage à deux étages afin de produire soit ladite première quantité de gaz de gonflage soit ladite deuxième quantité de gaz de gonflage, en commandant ladite ouverture de mise à l'air libre pour diriger ladite partie vers ledit coussin gonflable ou l'évacuer loin dudit coussin gonflable, en commandant ledit élément d'attache pour retenir ledit coussin gonflable dans ledit premier profil de développement ou ledit deuxième profil de développement, et des combinaisons de ceux-ci ;
dans lequel ledit module de détection et de diagnostic détecte une position de siège de ladite structure de siège par rapport audit boîtier et une utilisation de la ceinture de sécurité ; et dans lequel ledit algorithme de commande fournit :
un premier niveau discret de gonflage (131) si ledit niveau d'événement est un niveau faible, ladite position de siège est une première position, et ladite utilisation de la ceinture de sécurité est un état bouclée ;
un deuxième niveau discret de gonflage (132, 134) si ledit niveau d'événement est un niveau élevé, ladite position de siège est ladite première position, et ladite utilisation de la ceinture de sécurité est soit ledit état bouclé soit un état non bouclé ;
un troisième niveau discret de gonflage (133) si ledit niveau est ledit niveau faible, ladite position de siège est ladite première position et ladite utilisation de la ceinture de sécurité est ledit état non bouclé ;
un quatrième niveau discret de gonflage (135, 137) si ledit niveau d'événement est ledit niveau faible, ladite position de siège est une deuxième position et ladite utilisation de la ceinture de sécurité est soit ledit état bouclé soit ledit état non bouclé ; et
un cinquième niveau discret de gonflage (136, 138) si ledit niveau d'événement est ledit niveau élevé, ladite position de siège est ladite deuxième position, et ladite utilisation de la ceinture de sécurité est soit ledit état bouclé soit ledit état non bouclé.

2. Système de commande de pression de coussin gonflable selon la revendication 1, dans lequel ledit algorithme de commande adapte ledit niveau de gonflage dudit coussin gonflable durant le déploiement selon ledit niveau d'événement d'activation, ladite position de siège et ladite utilisation de la ceinture de sécurité.

3. Système de commande de pression de coussin gonflable selon la revendication 1, comprenant de plus un mécanisme d'actionnement (70) mobile entre une première position et une deuxième position, ladite première position étant configurée pour écarter ladite partie dudit coussin gonflable et pour retenir sélectivement ledit coussin gonflable dans ledit premier profil de développement, ladite deuxième position étant configurée pour diriger ladite partie vers ledit coussin gonflable et pour libérer ledit coussin gonflable jusqu'audit deuxième profil de développement.

4. Système de commande de pression de coussin gonflable selon la revendication 3, dans lequel ledit algorithme de commande est configuré pour choisir ledit niveau de gonflage parmi au moins cinq niveaux discrets de gonflage.

5. Système de commande de pression de coussin gonflable selon la revendication 3, dans lequel ledit mécanisme d'actionnement est déplacé de ladite première position à ladite deuxième position par un dispositif d'amorçage (76).

6. Système de commande de pression de coussin gonflable selon la revendication 5, dans lequel ledit dispositif d'amorçage est un amorceur pyrotechnique ou un actionneur pneumatique.

7. Système de commande de pression de coussin gonflable selon la revendication 1, dans lequel ledit algorithme de commande est configuré pour sélectionner lesdits niveaux de gonflage à partir d'au moins trois niveaux discrets de gonflage.

8. Système de commande de pression de coussin gonflable selon la revendication 1, dans lequel ledit niveau d'événement d'activation étant dans une plage définie par un niveau faible et un niveau élevé, ladite position de siège dans une plage définie par une première position et une deuxième position par rapport audit boîtier, et ladite utilisation de la ceinture de sécurité étant dans une plage définie par un état bouclé et un état non bouclé.

9. Système de commande de pression de coussin gonflable selon la revendication 8, dans lequel ladite première position est comprise entre une position à un tiers de l'avant et une position complètement en avant, et ladite deuxième position est comprise entre une position complètement en arrière et ladite position à un tiers de l'avant.

10. Système de commande de pression de coussin gonflable selon la revendication 1, dans lequel ledit premier niveau discret de gonflage est égal à zéro.

11. Système de commande de pression de coussin gonflable selon la revendication 1, dans lequel ledit deuxième niveau discret de gonflage est fourni par ledit dispositif de gonflage à deux étages produisant ladite deuxième quantité de gaz de gonflage, ladite ouverture de mise à l'air libre évacuant ladite partie dudit coussin gonflage, et ledit élément d'attache retenant ledit coussin gonflable dans ledit premier profil de développement.

12. Système de commande de pression de coussin gonflable selon la revendication 1, dans lequel ledit troisième niveau discret de gonflage est fourni par ledit dispositif de gonflage à deux étages produisant ladite première quantité de gaz de gonflage, ladite ouverture de mise à l'air libre évacuant ladite partie dudit coussin gonflage, et ledit élément d'attache retenant ledit coussin gonflable dans ledit premier profil de développement.

13. Système de commande de pression de coussin gonflable selon la revendication 1, dans lequel ledit quatrième niveau discret de gonflage est fourni par ledit dispositif de gonflage à deux étages produisant ladite première quantité de gaz de gonflage, ladite ouverture de mise à l'air libre diffusant ladite partie en direction dudit coussin gonflage, et ledit élément d'attache libérant ledit coussin gonflable dans ledit deuxième profil de développement.

14. Système de commande de pression de coussin gonflable selon la revendication 1, dans lequel ledit cinquième niveau discret de gonflage est fourni par ledit dispositif de gonflage à deux étages produisant ladite deuxième quantité de gaz de gonflage, ladite ouverture de mise à l'air libre diffusant ladite partie en direction dudit coussin gonflage, et ledit élément d'attache libérant ledit coussin gonflable dans ledit deuxième profil de développement.
